# EUROPÄISCHE PATENTSCHRIFT

(11) **EP 1 030 553 B1**
(45) Veröffentlichungstag und Bekanntmachung des Hinweises auf die Patenterteilung: **22.08.2001**
(21) Anmeldenummer: 98963335.9
(22) Anmeldetag: 06.11.1998
(51) Int. Cl.: A01K 41/06

(54) **BRUTVERFAHREN UND VORRICHTUNG ZUM KONTINUIERLICHEN BEBRÜTEN VON EIERN ALLER GEFLÜGELARTEN**
INCUBATION METHOD AND DEVICE FOR CONTINUOUS INCUBATION OF EGGS OF ALL FOWL SPECIES
PROCEDE D'INCUBATION ET DISPOSITIF POUR L'INCUBATION CONTINUE D'OEUFS DE TOUTES ESPECES DE VOLAILLES

(30) Priorität: 14.11.1997 DE 19750398
(43) Veröffentlichungstag der Anmeldung: 30.08.2000
(73) Patentinhaber: Dratt, Rainer, D-39626 Bismark (DE)
(72) Erfinder: Dratt, Rainer, D-39626 Bismark (DE)
(74) Vertreter: Leinung, Günter
(86) Internationale Anmeldenummer: DE9803243
(87) Internationale Veröffentlichungsnummer: WO9925184

(56) Entgegenhaltungen:
- DE-A- 4 407 407

## Beschreibung

Die Erfindung bezieht sich auf ein Brutverfahren und einer dazugehörigen Vorrichtung zum kontinuierlichen Bebrüten von Eiern aller Geflügelarten nach dem Oberbegriff des Anspruches 1.

Zum allgemeinen Stand der Technik gehört, daß die zu bebrütenden Eier in Eieinlagen, sogenannten Horden oder Plastrays, gelegt und anschließend in Hordenwagen- oder Regalen eingeschoben werden.
Um das Verfahren des Bebrütens möglichst effektiv zu gestalten, wurden in der Vergangenheit mehrere Lösungen vorgestellt.
So bezieht sich die DE 44 07 407 auf ein Verfahren und eine Vorrichtung zum Bebrüten von Eiern, bei der das Verfahren dadurch charakterisiert ist, daß die jeweiligen Bruteier in einem Eiträger aufgenommen, transportiert, gelagert und bebrütet werden, wobei bis zur Abnahme der geschlüpften Küken keinerlei Manipulationen am und mit dem Brutei außerhalb des Brutbehälters bzw. der Brutmaschine vorgenommen werden.
Das notwendige Wenden der Bruteier wird durch eine Einrichtung realisiert, die von außen auf die innerhalb der Brutmaschine vorgesehenen Hordenwagen und Eiträger einwirkt. Dies geschieht in der Weise, daß die Eiträger während des Bebrütens auf den jeweiligen Boden der Schlupfhorde abgesetzt werden, dabei das Ei auf den Schlupfhorden aufliegt und umfangsseitig frei innerhalb von Eiaufnahmen liegt, wobei die Eiaufnahmen zwar der Form der jeweiligen Bruteier angepaßt sind, diese jedoch nicht verhindern, daß die Bruteier in einem bestimmten Maße selbständig sich drehen oder wegrollen.

Bei dieser Lösung wurde insbesondere darauf Wert gelegt, daß die Bruteier nach ihrer Auflage auf den Eiträgern bis zur Schlupf nicht mehr umgelagert werden müssen, so daß durch diese Art der Lagerung, des Transportes und der Bebrütung positive Ergebnisse bei der Bebrütung erzielt werden sollen.
Wesentlicher Nachteil dieser Lösung ist, daß die Bruteier während der Brutphase in keiner exakten Position liegen und selbständig, wie bereits oben genannt, sich aus ihrer Brutposition in einem bestimmten Maß herausdrehen bzw. wegrollen, was sich schließlich negativ auf das Brutergebnis auswirkt.

Der Erfindung liegt daher die Aufgabe zugrunde, ein Brutverfahren und eine Vorrichtung zum kontinuierlichen Bebrüten von Eiern aller Geflügelarten zu entwickeln, mit dem sichergestellt ist, daß nach dem Absetzen der Bruteier auf den entsprechenden Hordenboden diese eine stabile Brutlage einnehmen und in dieser Position bis zum Schlupf der Küken verbleiben, sich nicht selbständig aus ihrer stabilen Brutlage herausbewegen können, wobei das Verfahren der Bebrütung den natürlichen Bedingungen in einem Gelege sehr nahe kommt und die Bruteffektivität erhöht wird.

Erfindungsgemäß wird die Aufgabe mit den kennzeichnenden Merkmalen der Ansprüche 1 und 6 gelöst.

Vorteilhafte Ausführungen und besondere Gestaltungen sind Gegenstand der Unteransprüche.

Danach wurde ein Brutverfahren entwickelt, welches vom Aufbringen der Bruteier auf die entsprechenden Eiträger, der Lagerung und des Transportes der Bruteier sowie der Phasen der Brut und der Schlupf, in kontinuierlichen Prozeßstufen abläuft.
Wesensmerkmal des erfindungsgemäßen Brutverfahrens ist, daß die aufzulegenden Bruteier wahllos, ohne jede vorherige genaue Lagebestimmung, auf die Eiträger verbracht und dann über bestimmbare Bewegungsabläufe ihre stabile Brutlage einnehmen, welche der optimalen Brutlage entspricht, da die Bruteier eine Schräglage einnehmen, die durch den Neigungswinkel zwischen der Längsachse eines jeden Bruteies zur Horizontalen bestimmt ist und einem Neigungswinkel von ca. 20° entspricht. Ferner ist wesentlich und bestimmend für das Brutverfahren, daß die Bruteier in ihrer Schräglage immer so ausgerichtet sind, daß ihre Luftblasen nach oben gerichtet sind und in dieser stabilen Brutlage bis zur Schlupf verbleiben.
Das für die Brut erforderliche Wenden der Bruteier erfolgt nach einem bestimmten Zeitregime, indem die Bruteier infolge einer Relativbewegung zwischen den Eiträgern und den Böden der Schlupfhorden, gewendet und dabei alle Bruteier in zwei oder mehreren Brutpositionen, die den natürlichen Brutbedingungen in einem Gelege entsprechen, bebrütet werden.
Es gehört auch zur Erfindung, daß nach dem Auflegen der Bruteier auf die Eiträger mittels der zwischen den Eiträgern und den Böden der Schlupfhorden sich ergebende Relativbewegung die Bruteier in ihre stabile Brutlage verbracht werden und diese bis zum Abschluß der Brut beibehalten.
Bei der einzubringenden Wendebewegung handelt es sich um eine Vor-Rückbewegung, einer reversiblen Bewegung, mit der gewährleistet ist, daß die Bruteier um ihre Längsachsen gewendet werden können und nach dem Erreichen einer neuen Brutlage in dieser für eine bestimmte, wählbare Zeit verweilen und danach eine nächste Brutlage, jeweils zwischen den beiden Endpositionen, einnehmen und die Bruteier nach jedem Bewegungszyklus in ihre Ursprungslage verbracht werden.

Die erfindungsgemäße Vorrichtung, welche die Realisierung des kontinuierlichen Brutverfahrens ermöglicht, ist durch die Ausbildung der Eiträger und der Böden der Schlupfhorden sowie deren Wirkzusammenhang charakterisiert.
Die Einträger besitzen erfindungsgemäß Öffnungen, die als Eiaufnahmen ausgebildet sind und aus zwei in elyptischer Form schalenförmig gestalteten Halterungen bestehen, die der äußeren Form der Bruteier angepaßt sind und die an ihren Stirnseiten, ihren Polen, mit Aussparungen versehen sind, wodurch eine freie und ungehinderte Bewegung der Bruteier ermöglicht wird.

Die Böden der Schlupfhorden sind erfindungsgemäß mit einem Profil versehen, welches vorzugsweise wellenförmig ausgebildet ist und somit Profilerhebungen und Profiltäler sich ergeben. Der unmittelbare Wirkzusammenhang zwischen den auf den Eiträgern aufgelegten Bruteiern sowie den Eiträgern zu den profilierten Böden der Schlupfhorden ergibt sich unmittelbar daraus, daß den Eiaufnahmen unterhalb des Eiträger und mittig zu jeder einzelnen Eiaufnahme einen Profilerhebung zugeordnet ist.

Mit dem nachfolgenden Ausführungsbeispiel soll die Erfindung näher erläutert werden.

Die dazugehörige Zeichnung zeigt in
- Figur 1:: eine Schlupfhorde mit eingesetztem Eiträger in perspektivischer Darstellung,
- Figur 2:: einen Eiträgerabschnitt in perspektivischer Darstellung,
- Figur 3:: einen Querschnitt durch eine Schlupfhorde mit eingesetztem Eiträger,
- Figur 4:: eine Teilansicht der Zuordnung eines um 90° versetzt dargestellten Eiträgers
zum Boden einer Schlupfhorde sowie eine Ansicht A,
- Figur 5:: aufgelegte Bruteier in ihrer stabilen Brutlage.

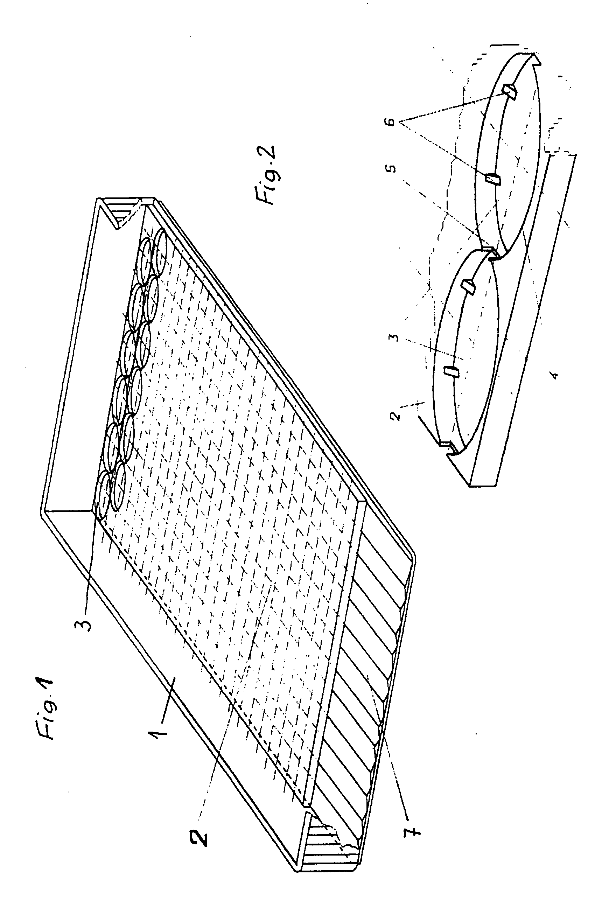

Nach dem vorgeschlagenen Brutverfahren werden die zu bebrütenden Bruteier 8 auf Eiträger 2 aufgelegt, die höhenverstellbar sowie verschiebbar in Schlupfhorden 1 eingesetzt sind.
In der Darstellung nach Figur 1 ist gezeigt, wie die Eiträger 2 in den Schlupfhorden 1 eingesetzt sind und wie ein Teil der Eiaufnahmen 3 bereits mit Bruteiern 8 belegt sind.
Das Auflegen oder das Verbringen der Bruteier 8 auf die Eiträger 2 erfolgt dabei wahllos, daß heißt, die Bruteier 8, werden ohne eine bestimmte Lageposition auf die Eiträger 2 verbracht und anschließend werden die so bestückten Schlupfhorden 1 in entsprechende Hordenwaagen eingestapelt.
Infolge einer auf die Eiträger 2 ausgeübte Vor- und Rückbewegung, des funktionellen Wirkzusammenhangs zwischen den Formen der Eiaufnahmen 3 und der Gestaltung der Böden 7 der Schlupfhorden 1, werden die Bruteier 8 in ihre stabile Lage, ihre optimale Brutlage verbracht, indem die auf die Eiträger 2 eingebrachte Bewegung von diesen auf die Bruteier 8 übertragen werden und die Bruteier 8 dabei in einen Bewegungsrhythmus versetzt werden, welcher zwangsweise die Bruteier 8 in ihre stabile Brutlage verbringt.
Dies wird in den Eiträgern 2 vorgesehenen Eiaufnahmen, die im weitesten Sinne der Form der zu bebrütenden Bruteier 8 angepaßt sind unterstützt, indem die Bruteier 8 in diesen Eiaufnahmen durch besonders ausgebildete Formen der Eiaufnahmen 3 umfangsseitig positioniert und auch geführt werden.

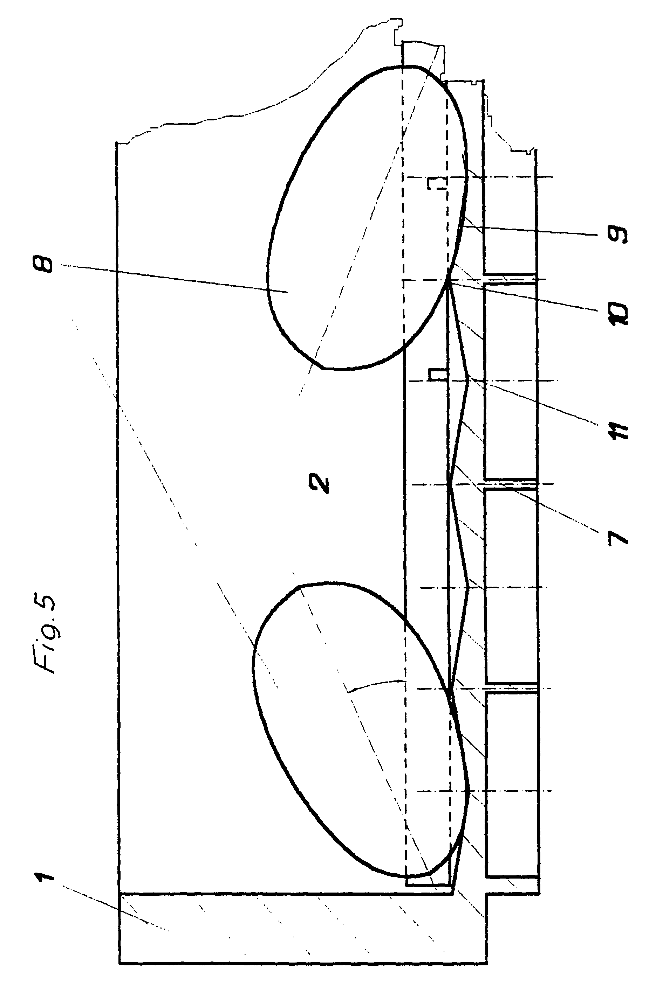

In der Figur 2 ist ein derartiger Eiträger 2 dargestellt, aus der die unmittelbare Anordnung und Ausbildung der Eiaufnahmen 3 ersichtlich ist. Die Eiaufhahmen 3 weisen dabei eine elyptische Form auf, die der äußeren Form der Bruteier 8 angepaßt ist und bestehen aus schalenförmigen Halterungen 4, die an ihren Stirnseiten, ihren Polen, nicht geschlossen sind, sondern dort Aussparungen 5 besitzen, die sicherstellen, daß die Bruteier 8 bei der Auflage auf den Eiträgern 2 und der Einleitung der entsprechenden Bewegungen ihre stabile und optimale Brutlage einnehmen können.
Die Aussparungen 5 an den Polen der schalenförmigen Halterungen 4 sind in ihrem Tiefenmaß, bezogen auf die Oberkante der schalenformigen Halterungen 4, in einem bestimmten Maßverhältnis zu diesen Oberkanten ausgebildet, damit die Bruteier 8 ungehindert ihre stabile und optimale Brutlage einnehmen können.
Diese Brutlage der Bruteier 8 wird in der Figur 5 gezeigt, zu der weiter unten nähere Ausführungen folgen.

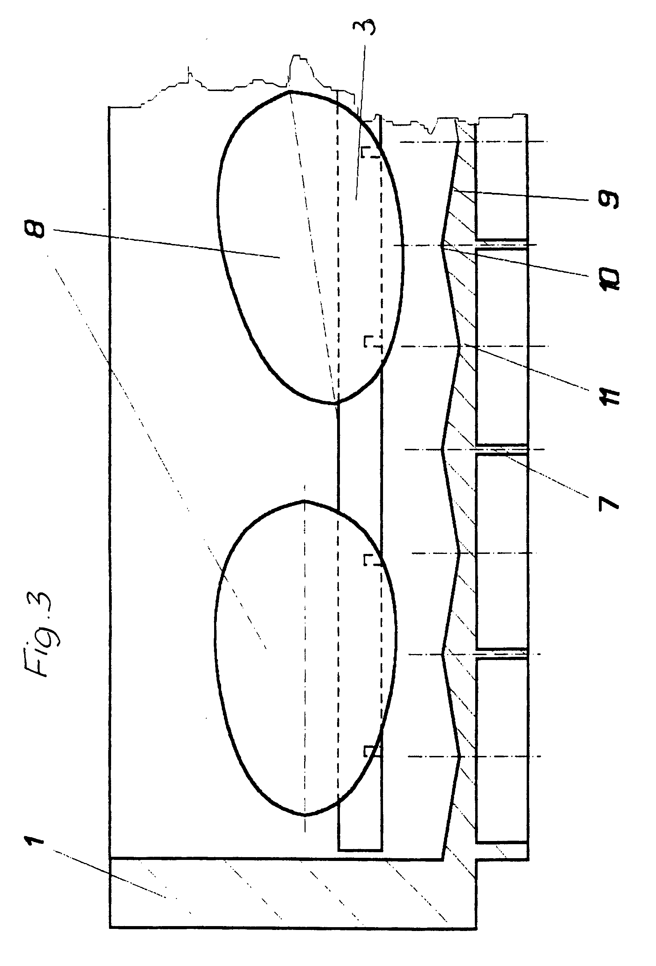

Die Ausgestaltung der Schlupfhorden 1 mit den besonders gestalteten Böden 7 und deren Zuordnung zu den Eiträgern 2 ist in einer Querschnittsdarstellung in der Figur 3 gezeigt.

Wesentliches Merkmal der neuen Schlupfhorde 1 besteht darin, daß der Boden 7 der Schlupfhorde 1 speziell ausgebildet ist und gemäß der Erfindung Profilierungen 9 besitzt, die wellenförmig ausgebildet sind und Profilerhebungen 10 und Profiltäler 11 bilden. Ferner ist dargestellt, wie die Eiträger 2 in den Schlupfhorden 1 eingeordnet und wie diese zu den Böden 8 angeordnet sind, nämlich in der Art und Weise, daß die Profilerhebungen 10 mittig zu einer Eiaufnahme 3 verläuft.

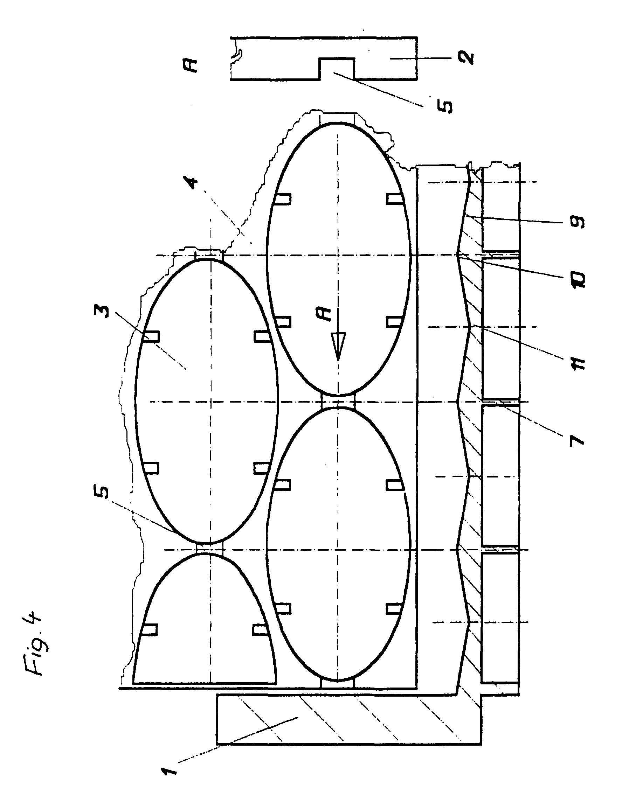

In der Detail- oder Ausschnittansicht nach Figur 3, in der Figur 4 gezeigt, wird nochmals ersichtlich, wie die Böden 7 zu den Eiträgern 2, speziell deren Profilerhebungen 10 zu den Eiaufnahmen 3 positioniert sind.
Aus dieser Darstellung ist ferner sehr deutlich zu erkennen, daß die Eiaufnahmen 3 aus schalenförmig ausgebildeten Halterungen 4 bestehen und deutlich wird, daß die Oberkanten der Aussparungen 5 tiefer liegen als die der schalenförmigen Halterungen 4.

Die Brutlage der Bruteier 8 in den Eiträgern 2 ergibt sich aus der prinziphaften Darstellung nach Figur 5, in der gezeigt ist, daß die Bruteier 8 in ihrer optimalen Brutlage so in den Eiträgern 2 eingelagert sind, daß sie mit der Luftblase nach oben gerichtet und in einer Schräglage in den Eiträgern 2 eingelagert und positioniert sind.
Diese optimale Brutlage nehmen die Bruteier 8 nach dem Absetzen des Eiträgers 2 auf den Hordenboden nach nur wenigen Bewegungszyklen ein und verbleiben in dieser Position bis zum Schlupf der Küken.
Das Maß der Schräglage der Bruteier ergibt sich aus dem Neigungswinkel α, welcher begrenzt wird durch die Längsachse der Bruteier 8 und der Horizontalen und mit einem Winkelmaß von ca. 20° ausgeführt ist.
In dieser stabilen Brutlage sind die Bruteier 8 einmal punktförmig auf den Seitenflächen der Böden 7 gestützt und werden umfangsseitig über die schalenförmigen Halterungen 4 positioniert und geführt.

Zum funktionellen Ablauf wird ausgeführt, daß, nachdem die Bruteier auf die Eiträger 2 in ungeordneter Folge und Lage aufgebracht wurden, die so bestückten Schlupfhorden 1 in Hordenwagen oder Hordenregalen eingeschoben und dann so komplett in Brutmaschinen verbracht werden. Während der Lagerung und des Transportes können sich die Eiträger 2 in einer angehobenen Stellung befinden, d. h., die Eiträger 2 besitzen dann zum Boden 7 einer jeden Schlußfhorde 1 ein bestimmtes Maß, ein sogenanntes Freimaß, damit die aufgelegten Bruteier 8 auf bzw. in den Eiaufnahmen 3 gestützt, auch auf vorzugsweise vier Stegen 6, in den Eiaufnahmen 3 sicher gelagert sind.

Vor Beginn der Brut, werden die Eiträger 2 auf die Böden 7 der Schlupfhorden 1 abgesenkt, so daß die in den Eiaufnahmen 3 befindlichen Bruteier 8 auf dem jeweiligen Boden 7 einer Schlupfhorde zum Aufliegen kommen.
Bis zu diesem Zeitpunkt befinden sich die Bruteier 8 noch in undefinierten Lage auf den Eiträgem 2, ihre Lage ist instabil, die nicht einer stabilen und optimalen Brutlage entsprechen.

Über einen nicht näher dargestellten Antrieb werden die Eiträger 2 bewegt, indem eine Relativbewegung zwischen den Eiträgern 2 und den Böden 7 der Schlupfhorden 1 erzeugt wird und infolge der Auflage der Bruteier 8 auf den Böden 7 der Schlupfhorden 1 und durch die umfangsseitige Führung durch die schalenförmig ausgebildeten Halterungen 4 werden die Brut-eier 8 kontinuierlich oder schrittweise bewegt. Da die Bewegungseinleitung eine Vor-Rückbewegung ist, somit eine reversible Bewegung darstellt, werden die Bruteier 8 auch in wechselnder Folge um ihre jeweilige Lage auf den Eiträgern 2 bewegt. Diese Bewegungsabläufe sichern, daß die aufgelegten Bruteier 8 eine stabile Lage, ihre optimale Brutlage, in den Eiträgern 2 derart einnehmen, daß sie in geneigter Form, in einer Schräglage von annähernd 20° zur Horizontalen auf den Böden 7 zu liegen kommen. In dieser optimalen Brutlage, wie auch in der Figur 5 gezeigt, verbleiben die Bruteier 8 bis zur Schlupf.

In dieser Position, mit nach oben gerichteter Luftblase, werden die Bruteier 8 nach einem bestimmbaren Zeitregime derart gewendet, daß alle Bruteier 8 in zwei oder mehreren Brutpositionen bebrütet werden, wobei nach dem Erreichen einer neuen Brutlage, die Bruteier 8 in dieser für eine bestimmte Zeit verweilen und danach eine nächste Lage, jeweils zwischen den beiden Endpositionen einnehmen und die Bruteier 8 nach jedem Bewegungszyklus in ihre Ursprungslage verbracht werden.
Diese Methode des Bebrütens in zwei oder mehreren Brutpositionen wirkt sich insbesondere positiv auf die Entwicklung der im Inneren der Bruteier 8 befindlichen Embryonen aus, da diesen genügend Zeit verbleibt, sich aus der einen Brutposition der neuen Brutposition anzupassen, daß heißt, im weitesten Sinne laufen die Embryonen dieser Wendebewegung nach, so daß die Embryonen in mehrere Nährstoffgebiete gelangen, was schließlich wesentlich mit dazu beiträgt, daß mit dem erfindungsgemäßen Brutverfahren Brutergebnisse erzielt werden, die weit über allen bekannten und angewendeten Brutverfahren liegen.
Ferner ist von Vorteil, daß diese Methode bei allen Brutverfahren mit verschiedensten Wendungsverfahren Anwendung finden kann, so bei der Rollwendung oder auch Drehwendung bzw. Kippwendung. Dies bedeutet, daß die in der optimalen Brutlage befindlichen Bruteier 8 sowohl um ihre Längsachse als auch um ihre kurze Achse gewendet werden können. Dies sowohl in einzelnen Verfahrensabläufen als auch in Kombinationen der Wendung um die Längsachse und um die kurze Achse der Bruteier 8.
Da die Vor- und Rückbewegung keine fortlaufende Bewegung in eine Richtung ist, sondern, wie bereits oben ausgeführt, eine reversible Bewegung, werden die Bruteier 8 nach Ablauf eines Bewegungszyklus immer in ihre Ursprungslage verbracht, was sich gleichfalls positiv auf die Entwicklung der Embryos und dem Brutergebnis auswirkt. Schließlich sei noch darauf verwiesen, daß das erfindungsgemäße Brutverfahren auch bei der Handauflage von exakt ausgebildeten Bruteiern 8 angewendet werden kann, wenn bei diesen Bruteiern 8 bereits optisch die Lage der Luftblase erkennbar wird, so daß bei der Handauflage derart ausgebildeter Bruteier 8, in Abhängigkeit von ihrer Form und auch Rasse, bereits die Bruteier 8 so in die Aufnahmen verbracht werden, daß sie mit der Luftblase nach oben gerichtet zur Auflage kommen und ihre Schräglage gesichert wird durch Profilierungen der Böden in den Schlupfhorden, wobei hier nicht zwingend die mittige Positionierung einer Profilerhebung zur Eiaufnahme erforderlich ist.

## Patentansprüche

1. Brutverfahren zum kontinuierlichen Bebrüten von Eiern aller Geflügelarten, die in Eiträgern aufgenommen und in Schlupfhorden mit den Eispitzen schräg nach unten gerichtet eingesetzt, gelagert, transportiert und bebrütet werden, von einer außerhalb des Brutapparates vorgesehenen Einrichtung um einen Winkel > 90 ° gewendet und die Eier ohne Umlage zur Schlupf gebracht werden, dadurch gekennzeichnet daß,
- die Bruteier wahllos, ohne eine vorbestimmte Lageposition auf die Eiträger (2) aufgelegt werden,
- die Bruteier durch die Form der Öffnungen der Eiaufnahmen (3) der Eiträger (2), durch die Böden (7) der Horden (1) und durch eine wechselnde Vor- und Rückbewegung, einer reversiblen Bewegung, in eine optimale und stabile Brutlage verbracht werden,
- in dieser Brutlage, mit nach oben gerichteter Luftblase und umfangsseitig geführt, die Bruteier nach einem bestimmten Zeitregime gewendet und
- alle Bruteier in zwei oder mehreren Brutpositionen, den natürlichen Bedingungen entsprechend, bebrütet werden.

2. Brutverfahren nach Anspruch 1, dadurch gekennzeichnet, daß
über eine Bewegungseinleitung, eine Relativbewegung zwischen den Eiträgern und den Böden der Schlupfhorden erzeugend, die Bruteier in ihrer Brutlage derart gewendet werden, daß die im Inneren der Bruteier sich entwickelnden Embryos sich stets in ihre optimale Brutposition, in Richtung zur Luftblase ausrichten können.

3. Brutverfahren nach den Ansprüchen 1 und 2, dadurch gekennzeichnet, daß
die Bruteier während der gesamten Brutzeit in ihrer stabilen, schrägen Brutlage verbleiben und in dieser Brutlage, unter einem Neigungswinkel von ca. 20°, zwischen der Langsachse und der Horizontalen, um ihre Längsachse gewendet werden.

4. Brutverfahren nach den Ansprüchen 1 bis 3, dadurch gekennzeichnet, daß
die Bruteier nach Erreichen einer neuen Brutlage in dieser für eine bestimmte und wählbaren Zeit verweilen, danach eine nächste Lage, jeweils zwischen den zwei Endpositionen einnehmen und die Bruteier nach jedem Bewegungszyklus in ihre Ursprungslage verbracht werden.

5. Brutverfahren nach einem der Ansprüche 1 bis 4, dadurch gekennzeichnet, daß
die Bewegungseinleitung auf die Bruteier und ihre Bebrütung in zwei oder mehreren Brutpositionen bei allen Wendungsverfahren, auch in Kombination von diesen, Anwendung findet.

6. Vorrichtung zur Durchführung des Brutverfahrens nach Anspruch 1, dadurch gekennzeichnet, daß
- die in Schlupfhorden (1) einsetzbaren Eiträger (2) Öffnungen für die Eiaufnahmen (3) besitzen, die aus zwei in elyptischer Form, der jeweiligen Bruteiform angepaßt, schalenförmig ausgebildeten Halterungen (4) bestehen, die an ihren Stirnseiten, den Polen, Aussparungen (5) aufweisen,
- die Eiträger (2) mit im Grund einer jeden Schlupfhorde (1) vorgesehenen profilierten Böden (7) in Wirkverbindung stehen,
- die profilierten Böden (7) mit quer zur Längsachse der Bruteier (8) und den elyptisch ausgebildeten Eiaufnahmen (3) verlaufende Profilierung (9) ausgebildet sind, die wellenförmig gestaltet, in wechselnder Folge Profilerhebungen (10) und Profiltäler (11) ergeben, in dieser Ausbildung und zur Bewegungsrichtung in den Schlupfhorden (1) eingelagert sind und immer eine Profilerhebung (10) mittig zu einer Eiaufnahme (3) angeordnet ist.

7. Vorrichtung nach Anspruch 6, dadurch gekennzeichnet, daß
die Eiträger (2) höhenverstellbar und verschiebbar in den Schlupfhorden (1) angeordnet sind.

8. Vorrichtung nach den Ansprüchen 6 und 7, dadurch gekennzeichnet, daß
die Profilierungen (9) der Böden (7) vorzugsweise gleichförmig ausgebildet und die Böden (7) als auch die Eiträger (2) aus Kunststoff hergestellt sind, wobei die Profilierungen (9) auch in anderen, von der wellenförmigen Ausbildung abweichenden Formen ausgebildet sein können, so beispielsweise zick-zack-förmig und dreieckförmig und die Profilerhebungen (10) mit Rundungen, Radien oder Spitzen ausgeführt sind.

9. Vorrichtung nach einem der Ansprüche 6 bis 8, dadurch gekennzeichnet, daß
die Bruteier (8) links- oder rechtsseitig von den Profilerhebungen (10) auf den zum jeweiligen Profiltal (11) abfallenden Seitenflächen und den schalenförmigen Halterungen (4) in mehreren Punkten gestützt sowie umfangsseitig geführt und in dieser Schräglage, mit ihren Luftblasen nach oben gerichtet, in den Eiträgern (2) angeordnet sind.

10. Vorrichtung nach einem der Ansprüche 6 bis 9, dadurch gekennzeichnet, daß
die Eiträger (2) in zwei Positionen, der Lager- und Transportposition und der Brutposition in den Schlupfhorden (1) angeordnet sind.

11. Vorrichtung nach einem der Ansprüche 6 bis 10, dadurch gekennzeichnet, daß
die Aussparungen (5) in ihrem Tiefenmaß zu den Oberkanten der Halterungen (4) in einem bestimmten Maßverhältnis ausgebildet sind, die ein Einnehmen der stabilen Brutlage und einen ungehinderten Bewegungsablauf der Bruteier (8) gewährleistet.

## Claims

1. Incubation procedure for the continuous incubation of all types of poultry eggs that are picked up by egg trays and are inserted, stored transported and incubated in hatching racks with the tip of the egg pointing downwards at an incline, that are turned at an angle of >90 % by a device outside the incubator and the eggs hatched without being displaced, characterised by
- the incubation eggs being placed on the egg tray (2) without predetermined positioning
- the incubation eggs being placed in the best and most stabile incubation position by the shape of the openings in the egg receptacles (3) of the egg tray (2), by the floors (7) of the racks (1) and by an alternating forward and backward movement, by a reversible motion
- the incubation eggs being turned by their circumference in determined cycles in this hatching position with the air-sac aligned upwards and,
- all incubation eggs being incubated in two or more incubating positions corresponding to natural conditions.

2. Incubation procedure as in claim 1, characterised by
a triggered movement turning the incubation eggs in such a manner in a relative movement generated between the egg trays and the floors of the hatching racks, that the embryos developing inside the incubated eggs are always in their best incubation position and can align themselves in the direction of the air-sac.

3. Incubation procedure as in claims 1 and 2 characterised by
the incubation eggs remaining in their stabile, inclined incubating position during the entire incubation period and being turned in this incubation position at an incline of approx. 20°, between the longitudinal axis and the horizontal around their longitudinal axis.

4. Incubation procedure as in claims 1 to 3, characterised by
the incubation eggs, after attaining a new incubation position, remaining in this position for a certain time as selected to then take in the next position - between the two end positions each - and the incubation eggs being brought back into their original position after completion of every movement cycle.

5. Incubation procedure as in claims 1 to 4 characterised by
the triggering movement being applied ion the incubation eggs and their incubation in two or several incubation positions in all turning procedures, also in a combination of such procedures.

6. Device to carry out the incubation as in claim 1, characterised by
the egg trays (2) that can be inserted in the hatching racks (1) having openings to accept the eggs, receptacles (3) that consist of two elliptically shaped saucer-type mountings (4), aligned to the respective incubation egg shape, that have grooves (5) on the face sides - the poles.
- the egg trays (2) being in connected action with the profiled floors (7) provided in the floor of every hatching rack (1)
- the profiled floors (7) being formed with the profile (9) running cross to the longitudinal axis of the incubation eggs (8) and the elliptically formed egg receptacles, designed in a profile of waved contour in this formation resulting in an alternating sequence of profile elevations (10) and profile troughs (11), which are embedded in this formation in the hatching racks (1) for the direction of motion and a profile elevation (10) is always arranged in the center of an egg receptacle (3).

7. Device as in claim 6, characterised by
the egg tray (2) being arranged height adjustable and displaceable in the hatching racks (1)

8. Device as in claims 6 an 7, characterised by
the profiles (9) of the floors (7) preferably being formed equally and the floors (7) and the egg trays (2) being made of plastic material, whereby the profiles (9) may also be formed in other forms diverging from the wavy contours, as for instance in zigzag shape and triangular shape and the profile elevations (10) being designed with curves, radiuses or pointed peaks.

9. Device as in one of the claims 6 to 8, characterised by
the incubation eggs (8) being arranged in the egg trays (2) with their air-sacs to the top on the left or right side of the profile elevations (10) on the respective sloping side surfaces of the profile trough (11) and the saucer type mountings (4) being supported at several points and guided by their circumference and in this inclined position.

10. Device as in one of the claims 6 to 9, characterised by
the egg trays (2) being arranged in two positions, the storage and transport position and the incubation position in the hatching racks (1)

11. Device as in one of the claims 6 to 10 characterised by
The grooves (5) being developed in a certain dimensional relation regarding their depth in relation to the upper edges of the saucer-type mountings (4), these guarantee a stabile incubation position and an unimpaired motion procedure of the incubation eggs (8)

## Revendications

1. Procédé de couvaison pour la couvaison en continu d'oeufs de tous types de volailles qui sont logés dans des porte-oeufs et qui sont insérés, logés, transportés et couvés de manière inclinée vers le bas avec la pointe vers le bas dans des grilles de glissement, sont tournés selon un angle > 90° par un dispositif prévu à l'extérieur de la couveuse, et les oeufs sont amenés à glisser sans être retournés, caractérisé en ce que
les oeufs couvés sont posés en vrac sans une position prédéterminée sur les porte-oeufs (2),
les oeufs couvés sont amenés dans une position stable et optimale de couvaison par la forme des ouvertures des logements d'oeufs (3) des porte-oeufs (2), à travers les étagères (7) des grilles (1) et par un mouvement d'avance et de recul alternatif, mouvement réversible, dans cette position de couvaison, ils sont guidés avec la poche d'air dirigée vers le haut et sur la périphérie, les oeufs couvés sont retournés après un certains temps et tous les oeufs couvés sont couvés dans deux ou plusieurs positions de couvaison en fonction des conditions naturelles.

2. Procédé de couvaison selon la revendication 1 caractérisé en ce que
par l'introduction d'un mouvement, générant un mouvement relatif entre les porte-oeufs et les étagères des grilles de glissement, les oeufs couvés sont tournés dans leur position de couvaison de sorte que les embryons se développant à l'intérieur des oeufs couvés peuvent s'orienter dans leur position optimale de couvaison en direction de la poche d'air.

3. Procédé de couvaison selon les revendications 1 et 2, caractérisé en ce que les oeufs de couvaison restent pendant tout le temps de couvaison dans leur position de couvaison stable et inclinée et sont tournés autour de leur axe longitudinal suivant un angle d'inclinaison d'environ 20° entre l'axe longitudinal et l'horizontale.

4. Procédé de couvaison selon les revendications 1 à 3, caractérisé en ce que les oeufs restent dans leur nouvelle position de couvaison après l'avoir atteinte pendant une certaine durée librement sélectionnable, prennent ensuite une situation suivante entre les deux positions finales et les oeufs couvés sont ramenés après chaque cycle de déplacement dans leur position initiale.

5. Procédé de couvaison selon l'une des revendications 1 à 4, caractérisé en ce que l'introduction de mouvements sur les oeufs couvés et leur couvaison dans deux ou plusieurs positions de couvaison sont applicables à tous les procédés de retournement également en association avec ceux-ci.

6. Dispositif pour la mise en oeuvre du procédé de couvaison selon la revendication 1, caractérisé en ce que les porte-oeufs (2) insérables dans des grilles de glissement (1) possèdent des ouvertures pour les logements d'oeufs (3) qui se composent de deux supports (4) de forme elliptique en forme de coquille adaptée à la forme de l'oeuf couvé, supports qui présentent des évidements (5) sur leurs faces avants, les pôles
les porte-oeufs (2) coopèrent avec les étagères profilées (7) prévues au fond de chaque grille de glissement (1),
les étagères profilées (7) étant conçues avec un profilé (9) s'étendant transversalement à l'axe longitudinal des oeufs couvés (8) et des logements d'oeufs (3) de forme elliptique donnant des élévations (10) et des déclivités (11) de forme ondulée en alternance, les étagères étant logées dans les grilles de glissement (1) et dans cette configuration en direction de la direction de déplacement et une élévation de profilé (10) est toujours disposée au milieu d'un logement d'oeuf (3).

7. Dispositif selon la revendication 6, caractérisé en ce que
les porte-oeufs (2) sont disposés réglables en hauteur et mobiles dans les grilles de glissement (1).

8. Dispositif selon les revendications 6 et 7, caractérisé en ce que les profilés (9) des étagères (7) sont de préférence de forme identiques et les étagères (7) ainsi que les porte-oeufs (2) sont en matière plastique, les profilés pouvant avoir une autre forme divergeant de la forme ondulée par exemple en forme de zigzag et en forme de triangle et les élévations de profilés (10) peuvent présenter des arrondis, des rayons ou des pointes.

9. Dispositif selon l'une des revendications 6 à 8, caractérisé en ce que les oeufs couvés (8) sont soutenus en plusieurs points à droite ou à gauche par les élévations de profilés (10) sur les surfaces latérales tombant en direction du creux de vallée (11) respectif et les supports (4) en forme de coquille et sont guidés sur la périphérie et sont disposés dans cette position inclinée avec les bulles d'air dirigées vers le haut dans les porte-oeufs (2).

10. Dispositif selon l'une des revendications 6 à 9, caractérisé en ce que les porte-oeufs (2) sont disposés dans deux positions, la position de transport et la position de stockage et dans la position de couvaison dans les grilles de glissement (1).

11. Dispositif selon l'une des revendications 6 à 10, caractérisé en ce que les évidements (5) sont conçus dans un certain rapport dimensionnel en profondeur par rapport aux bords supérieur des supports (4) ce qui garantit une prise de la position stable de couvaison et une mobilité non entravée des oeufs de couvaison (8).
